# EUROPEAN PATENT SPECIFICATION

(11) **EP 2 521 398 B1**
(45) Date of publication and mention of the grant of the patent: **01.05.2019**
(21) Application number: 10850563.7
(22) Date of filing: 25.09.2010
(51) Int. Cl.: H04W 36/02, H04W 28/04, H04W 88/02

(54) **METHOD, DEVICE AND SYSTEM FOR PROCESSING USER EQUIPMENT HANDOVER IN LONG TERM EVOLUTION (LTE) SYSTEM**
VERFAHREN, VORRICHTUNG UND SYSTEM ZUR VERARBEITUNG VON BENUTZERGERÄTEÜBERGABEN IN EINEM LTE-SYSTEM
PROCÉDÉ, DISPOSITIF ET SYSTÈME POUR LE TRAITEMENT DU TRANSFERT INTERCELLULAIRE D'UN ÉQUIPEMENT UTILISATEUR DANS UN SYSTÈME D'ÉVOLUTION À LONG TERME (LTE)

(30) Priority: 28.04.2010 CN 201010160661
(43) Date of publication of application: 07.11.2012
(73) Proprietor: ZTE Corporation, Shenzhen, Guangdong 518057 (CN)
(72) Inventor: LUO, Zhiping, Shenzhen Guangdong 518057 (CN)
(74) Representative: Manitz Finsterwald Patent- und Rechtsanwaltspartnerschaft mbB
(86) International application number: PCT/CN2010/077269
(87) International publication number: WO 2011/134232

(56) References cited:
- EP-A2- 1 868 408
- CN-A- 101 047 967
- CN-A- 101 094 461
- US-A1- 2005 039 101
- US-A1- 2009 124 259
- US-A1- 2010 034 169

## Description

### Technical Field

The present invention relates to the field of mobile communications, and more particularly, to a method, a device and a system for processing handover in a Long Term Evolution (LTE) system. The features of the preamble of the independent claims are known from EP 1 868 408 A2. Related technologies are known from US 2010/034169 A1.

### Background of the Related Art

Media Access Control (MAC) protocol layer in a radio interface protocol stack of a LTE system is a sub-layer of layer 2 (L2) and is located under a Radio Link Control (RLC) layer. The MAC protocol layer provides multiplexing and de-multiplexing functions for users and control data. The functions of the MAC protocol layer includes multiplexing and de-multiplexing of the RLC PDU, transmission and retransmission functions of the HARQ, mapping of logical channels and transmission channels, and others. L2 comprises three sub-layers, a MAC protocol layer, RLC sub-layer and Packet Data Convergence Protocol (PDCP) sub-layer respectively.

A specific service may operate in an acknowledged mode (AM) or an unacknowledged mode (UM) in the RLC layer. For a service operating in the AM, high-layer data with added necessary control protocol overhead is transmitted by a sending end and is ensured to be transmitted to a peer entity. Since the RLC layer has an Auto Repeat Request (ARQ) function, if the RLC layer receives wrong RLC PDU, it will notify a RLC entity at the opposite end to retransmit the PDU. For a service operating in the UM, the RLC layer does not have the ARQ function.

When user equipment (UE) is in a moving state, handover between different cells and between different base stations will occur. At this time, if there is uplink data in the UE's current service, it is possible that part of the uplink data has been uploaded to a source base station.

### Summary of the Invention

The invention is defined by the claims. The present invention provides a method, a device, and a system for processing handover of user equipment in a long evolution term (LET) system according to appended independent claims so as to solve the problem that data in an uplink data buffer in a MAC protocol layer cannot be reverse-transmitted to a destination base station. Further improvements and embodiments are provided in the dependent claims.

The present invention provides a method for processing handover of user equipment comprising:
the user equipment performing cross base station handover from a source base station to a destination base station; and
the source base station obtaining and reverse-transmitting uplink buffer data of the user equipment in a media access control protocol layer and other sub-layers of layer 2 to the destination base station.

Preferably, the other sub-layers of the layer 2 include a packet data convergence protocol sub-layer and a radio link control sub-layer. The step of the source base station obtaining and reverse-transmitting the uplink buffer data of the user equipment in the media access control protocol layer and the other sub-layers of the layer 2 to the destination base station comprises: a control plane of the source base station notifying a user plane to reverse-transmit service data; the source base station obtaining uplink buffer data in the packet data convergence protocol sub-layer, the radio link control sub-layer and the media access control protocol layer of the source base station; and the source base station reverse-transmitting the uplink buffer data in the packet data convergence protocol sub-layer, the radio link control sub-layer and the media access control protocol layer of the source base station to the destination base station. Preferably, the step of the source base station obtaining the uplink buffer data in the packet data convergence protocol sub-layer, the radio link control sub-layer and the media access control protocol layer of the source base station comprises: the packet data convergence protocol sub-layer notifying the radio link control sub-layer to upload service data; the radio link control sub-layer notifying the media access control protocol layer to upload the service data; the media access control protocol layer transmitting the uplink buffer data to the radio link control sub-layer; and the radio link control sub-layer transmitting the uplink buffer data in the radio link control sub-layer and the media access control protocol layer to the packet data convergence protocol sub-layer. Preferably, the step of the source base station obtaining the uplink buffer data in the packet data convergence protocol sub-layer, the radio link control sub-layer and the media access control protocol layer of the source base station further comprises: the source base station arranging according to time sequence the uplink buffer data transmitted to the media access control protocol layer and the radio link control sub-layer of the packet data convergence protocol sub-layer as well as the uplink buffer data in the packet data convergence protocol sub-layer, and delivering data packets with consecutive serial numbers of the uplink buffer data to a core network. Preferably, the step of the source base station reverse-transmitting the uplink buffer data in the packet data convergence protocol sub-layer, the radio link control sub-layer and the media access control protocol layer of the source base station to the destination base station comprises: the source base station reverse-transmitting the uplink buffer data in the packet data convergence protocol sub-layer, the radio link control sub-layer and the media access control protocol layer that is not delivered to the core network to the destination base station.

Preferably, the user equipment's current service operates in an acknowledged mode, and the method also comprises: the radio link control layer of the source base station generating and sending a status report to the user equipment, the status report carrying information of the uplink buffer data in the media access control protocol layer that is reverse-transmitted to the destination base station.

The present invention also provides a base station comprising:
a buffer data transmitting module configured to, upon cross base station handover of user equipment from the base station to other base station, acquire and reverse-transmit uplink buffer data of the user equipment in a media access control protocol layer and other sub-layers of layer 2 to the other base station.

Preferably, the user equipment's current service operates in an acknowledged mode, and the base station further comprises a status reporting module configured to generate and send a status report to the user equipment, the status report carrying information of the uplink buffer data in the media access control protocol layer that is reverse-transmitted to a destination base station.

The present invention also provides a system for processing handover of user equipment comprising a source base station, a destination base station and user equipment, wherein
the source base station is configured to acquire and reverse-transmit uplink buffer data of the UE in a media access control protocol layer and other sub-layers of layer 2 to a destination base station when the user equipment performs cross base station handover to the destination base station.

Preferably, the user equipment's current service operates in an acknowledged mode, the source base station is further configured to generate and send a status report to the user equipment, the status report carrying information of the uplink buffer data in the media access control protocol layer that is reverse-transmitted to the destination base station.

The present invention provides a method, a device and a system for processing handover of user equipment (UE) such that when the UE performs cross base station handover from a source base station to a destination base station, the source base station obtains and reverse-transmits uplink buffer data of the UE in a MAC protocol layer and other sub-layers of layer 2 to the destination base station, thus solving the problem that the uplink buffer data in the MAC protocol layer cannot be reverse-transmitted to the destination base station, avoiding user plane delay or air-interface packet loss upon cross base station handover of the UE, and enhancing user experience.

### Brief Description of Drawings

FIG. 1 is a flow chart of a method for processing handover in accordance with the first embodiment of the present invention;
FIG. 2 is a flow chart of a method for processing handover in accordance with the second embodiment of the present invention; and
FIG. 3 is a flow chart of a method for processing handover in accordance with the third embodiment of the present invention.

### Preferred Embodiments of the Present Invention

When UE is in a moving state, handover between different cells and between different base stations will occur. If the UE has uplink service at this time, a source base station is required to reverse-transmit uplink data to a destination base station. For the UE's service operating in an AM, air-interface packet loss is not allowed, and for service operating in an UM, the air-interface packet loss should be as less as possible. In order to shorten service delay during the handover and reduce the packet loss, uplink service messages buffered in each sub-layer of L2 should be reverse-transmitted to the destination base station. From a user's perspective, when the user makes a video call in the moving state while having uplink and downlink services, if the UE's current service operates in the AM, since uplink data received by a MAC layer is not reverse-transmitted to the destination base station, the UE will hold that the data is not sent successfully, and a retransmission will be initiated, resulting in large service use during the handover, thus the user may feel unsmooth of the service. When the UE's current service operates in the UM, since the uplink data received by the MAC layer is not reverse-transmitted to the destination base station and the RLC layer does not have the ARQ function, the UE will not re-send messages discarded by the MAC layer, and mosaic will occur in the video service, thus the user experience is bad. The reason for unsmooth of the service or the packet loss is that the MAC layer does not reverse-transmit the buffered messages to the destination base station. For the service operating in the AM, a sending end has successfully transmitted service data to the destination end via an air interface, but since the RLC layer at a receiving end does not return ACK information to the sending end, the sending end considers that the data transmission is unsuccessful, and the service data is retransmitted. For the service operating in the UM, the sending end has successfully sent the service data to the destination end via the air interface, it considers that the receiving end has successfully processed the data, but in fact the corresponding service end has not received the data.

In order to solve the aforementioned problem, an embodiment of the present invention provides a method for processing handover for the Media Access Control (MAC) layer during cross base station handover to shorten handoff delay and reduce packet loss.

The first embodiment of the present invention will be described in conjunction with the accompanying drawings.

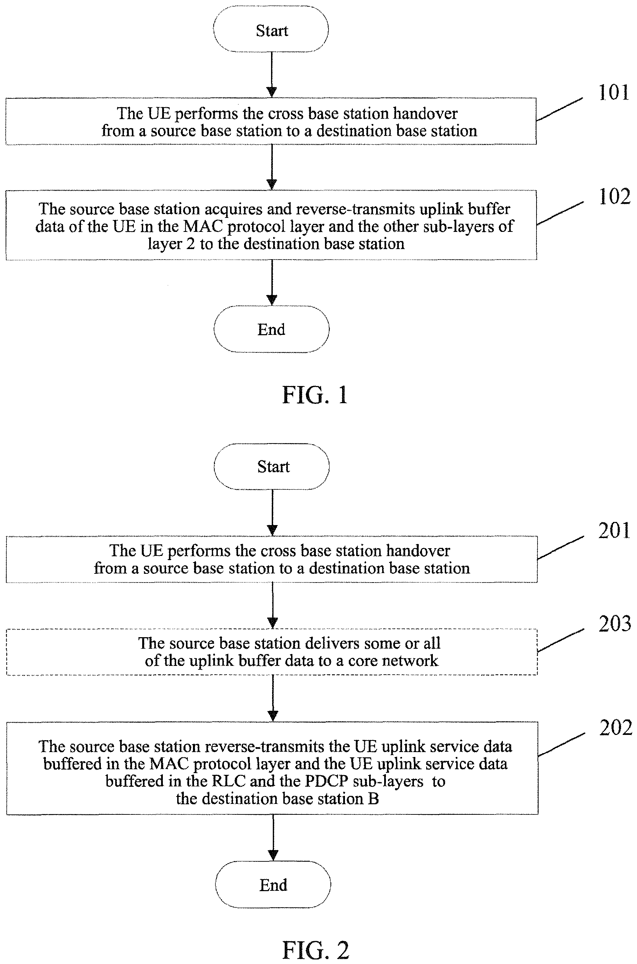

The first embodiment of the present invention provides a method for processing handover. A procedure where this method is used to process cross base station handover is shown in FIG. 1 and comprises the following steps.

In step 101, the UE performs the cross base station handover from a source base station to a destination base station.

In the embodiment of the present invention, the UE operates in the source base station, and handover from the source base station to the destination base station occurs in moving.

In step 102, the source base station acquires and reverse-transmits uplink buffer data of the UE in the MAC protocol layer and the other sub-layers of layer 2 to the destination base station.

Specific steps in this step will be described below.

A control plane of the source base station notifies a user plane to reverse-transmit service data.

The source base station acquires uplink buffer data in the PDCP sub-layer, the RLC sub-layer and the MAC protocol layer of the base station. Specifically, the PDCP sub-layer notifies the RLC sub-layer to upload the service data, the RLC sub-layer then notifies the MAC protocol layer to upload the service data, and the MAC protocol layer transmits the uplink buffer data to the RLC sub-layer, and then the RLC sub-layer transmits the uplink buffer data in the RLC sub-layer and the MAC protocol layer to the PDCP sub-layer.

The source base station reverse-transmits the uplink buffer data in the PDCP sub-layer, the RLC sub-layer and the MAC protocol layer of the base station to the destination base station.

Optionally, in this step, all uplink buffer data in all the sub-layers may be arranged according to time sequence after the uplink buffer data in the MAC protocol layer and the RLC sub-layer are transmitted to the PDCP sub-layer, that is, all data packets of all uplink buffer data are ordered according to serial numbers of the data packets. After the time sequence arrangement is completed, the source base station directly delivers the data packets with consecutive serial numbers to a core network, and the remaining uplink buffer data that is not delivered to the core network is reverse-transmitted to the destination base station. In particular, the serial numbers of the data packets of all uplink buffer data in the source base station are consecutive, and at this time, the source base station delivers all uplink buffer data to the core network. Thus, the destination base station can directly acquire from the core network some or all of the uplink service data uploaded by the UE, thereby further improving the data transmission efficiency.

After the source base station reverse-transmits the uplink buffer data in each sub-layer of the layer 2 to the destination base station, the destination base station can continue its service with the UE according to the uplink buffer data.

The present invention provides a method, a device and a system for processing handover of user equipment (UE) such that when the UE performs cross base station handover from a source base station to a destination base station, the source base station obtains and reverse-transmits uplink buffer data of the UE in a MAC protocol layer and other sub-layers of layer 2 to the destination base station, thus solving the problem that the uplink buffer data in the MAC protocol layer cannot be reverse-transmitted to the destination base station, avoiding user plane delay or air-interface packet loss upon cross base station handover of the UE, and enhancing user experience.

The second embodiment of the present invention will be described in conjunction with the accompanying drawings.

In the embodiment of the present invention, the UE's current service operates in a UM. A procedure where the method for processing handover in accordance with the embodiment of the present invention is used to complete cross base station handover of the UE is shown in FIG. 2 and comprises the following steps.

In step 201, the UE performs the cross base station handover from a source base station to a destination base station.

The embodiment of the present invention is described by taking the UE which makes a video conference service and operates in the UM as an example. Other services in which the uplink data exists are within the application scope of the method for processing handover in accordance with the embodiment of the present invention.

In this step, the UE is in the cell A of the source base station 1, the destination base station is the cell B of the base station 2, the UE moves from the cell A to the cell B, and cross base station handover occurs.

In step 202, the source base station reverse-transmits the UE uplink service data buffered in the MAC protocol layer (that is, the uplink buffer data in the MAC protocol layer) and the UE uplink service data buffered in the RLC and the PDCP sub-layers (that is, the uplink buffer data in the RLC sub-layer and the PDCP sub-layer) to the destination base station B.

The specific implementation method in this step will be described with reference to step 102 in the first embodiment of the present invention.

Optionally, in step 203, the source base station delivers some or all of the uplink buffer data to a core network.

Before the data is reverse-transmitted from the source base station to the destination base station in step 202, optionally, in this step, all uplink buffer data in all the sub-layers is arranged according to time sequence after the uplink buffer data in the MAC protocol layer and the RLC sub-layer is transmitted to the PDCP sub-layer, that is, all data packets of all uplink buffer data are ordered according to serial numbers of the data packets. After the time sequence arrangement is completed, the source base station directly delivers the data packets with consecutive serial numbers to the core network, and the remaining uplink buffer data that is not delivered to the core network is reverse-transmitted to the destination base station. In particular, the serial numbers of the data packets of all uplink buffer data in the source base station are consecutive, and at this time, the source base station delivers all uplink buffer data to the core network. Thus, the destination base station can directly acquire from the core network some or all of the uplink service data uploaded by the UE, thereby further improving the data transmission efficiency.

The third embodiment of the present invention will be described in conjunction with the accompanying drawings.

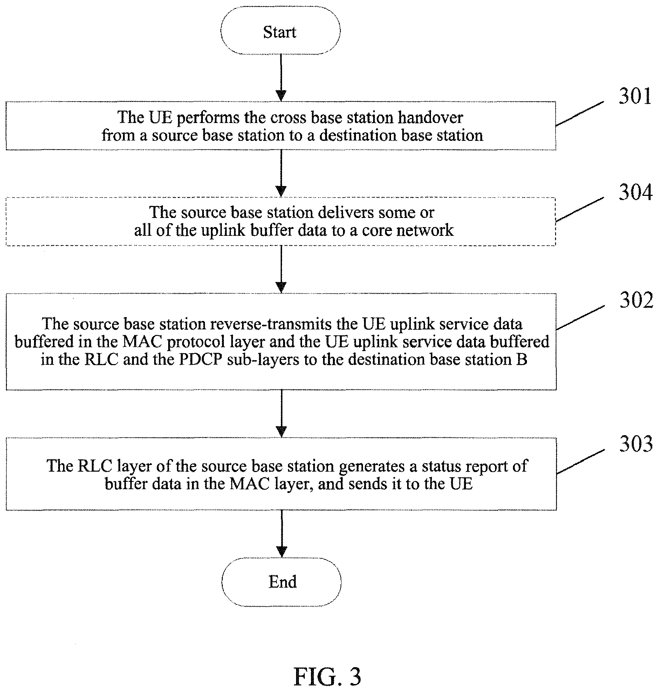

In the embodiment of the present invention, the UE's current service operates in an AM. A procedure where the method for processing handover in accordance with the embodiment of the present invention is used to complete cross base station handover of the UE is shown in FIG. 3 and comprises the following steps.

In step 301, the UE performs the cross base station handover from a source base station to a destination base station.

The embodiment of the present invention is described by taking the UE which makes a video conference service and operates in the AM as an example. Other services in which the uplink data exists are within the application scope of the method for processing handover in accordance with the embodiment of the present invention.

In this step, the UE is in the cell A of the source base station 1, the destination base station is the cell B of the base station 2, the UE moves from the cell A to the cell B, and cross base station handover occurs.

In step 302, the source base station reverse-transmits the UE uplink service data buffered in the MAC protocol layer (that is, the uplink buffer data in the MAC protocol layer) and the UE uplink service data buffered in the RLC and the PDCP sub-layers (that is, the uplink buffer data in the RLC sub-layer and the PDCP sub-layer) to the destination base station B.

In step 303, the RLC layer of the source base station generates a status report of buffer data in the MAC layer, and sends it to the UE, thus preventing the UE from retransmitting the data after handover to the cell B.

Optionally, in step 304, the source base station delivers some or all of the uplink buffer data to a core network.

Before the data is reverse-transmitted from the source base station to the destination base station in step 303, optionally, in this step, all uplink buffer data in all the sub-layers is arranged according to time sequence after the uplink buffer data in the MAC protocol layer and the RLC sub-layer is transmitted to the PDCP sub-layer, that is, all data packets of all uplink buffer data are ordered according to serial numbers of the data packets. After the time sequence arrangement is completed, the source base station directly delivers the data packets with consecutive serial numbers to the core network, and the remaining uplink buffer data that is not delivered to the core network is reverse-transmitted to the destination base station. In particular, the serial numbers of the data packets of all uplink buffer data in the source base station are consecutive, and at this time, the source base station delivers all uplink buffer data to the core network. Thus, the destination base station can directly acquire from the core network some or all of the uplink service data uploaded by the UE, thereby further improving the data transmission efficiency.

The present invention also provides a base station comprising a buffer data transmitting module.

The buffer data transmitting module is configured to, upon cross base station handover of UE from the base station to other base station, acquire and reverse-transmit uplink buffer data of the UE in a MAC protocol layer and other sub-layers of layer 2 to the other base station.

Further, the UE's current service operates in an AM, and the base station further comprises a status reporting module.

The status reporting module is configured to generate and send a status report to the UE, the status report carrying information of the uplink buffer data in the MAC protocol layer that is reverse-transmitted to a destination base station.

The present invention also provides a system for processing handover of user equipment comprising a source base station, a destination base station and UE, wherein the UE performs cross base station handover from a source base station to a destination base station.

The source base station is configured to acquire and reverse-transmit uplink buffer data of the UE in a MAC protocol layer and other sub-layers of layer 2 to the destination base station when the UE performs the cross base station handover to the destination base station.

Further, the UE's current service operates in the AM.

The source base station is further configured to generate and send a status report to the UE, the status report carrying information of the uplink buffer data in the MAC protocol layer that is reverse-transmitted to the destination base station.

The base station and handover processing system described above can be used in conjunction with the handover processing method in accordance with the embodiment of the present invention. When the UE performs cross base station handover from the source base station to the destination base station, the source base station obtains and reverse-transmits the uplink buffer data of the UE in the MAC protocol layer and the sub-layers of layer 2 to the destination base station, thus solving the problem that the uplink data buffer data in the MAC protocol layer cannot be reverse-transmitted to the destination base station, avoiding user plane delay or air interface packet loss when the UE is in the cross base station handover, and improving the user experience. In addition, when the UE's current service operates in the AM, the source base station might also send a status report to the UE to notify that the UE has reverse-transmitted the uplink data buffer data to the destination base station, thereby preventing the UE from retransmitting the successfully transmitted uplink data and improving the system efficiency.

It may be understood by those skilled in the art that all or some of steps of the embodiments described above may be implemented using computer programs, which may be stored in a computer-readable storage medium and executed in a corresponding hardware platform (such as, system, device, apparatus, component, and the like). The computer programs, when executed, can comprise one of or a combination of the steps of the method embodiments.

Optionally, all or some of the steps of the embodiments described above may also be implemented using integrated circuits. These steps may be made into integrated circuit modules, or some of the integrated circuit modules or steps may be made into a single integrated circuit module. Thus, the present invention is not limited to a any particular combination of hardware and software.

Devices, functional modules or functional units in the embodiments described above may be implemented using a universal computation device, and they can be integrated into a single computing device or distributed across a network consisting of multiple computation devices.

Devices, functional modules or functional units in the embodiments described above may be implemented in a form of software functional modules and stored in a computer readable storage medium when sold or used as an individual product. The aforementioned computer-readable storage medium may be a read-only memory, disk, or CD-ROM.

### Industrial Applicability

Compared with the prior art, the present invention solves the problem that the uplink buffer data in the MAC protocol layer cannot be reverse-transmitted to the destination base station, thus avoding user plane delay or air-interface packet loss when the UE is in cross base station handover, and enhancing the user experience.

## Claims

1. A method for processing handover of user equipment comprising:
the user equipment performing (101) cross base station handover from a source base station to a destination base station;
**characterized by**
the source base station obtaining and reverse-transmitting (102) uplink buffer data of the user equipment in a media access control protocol layer and other sub-layers of layer 2 to the destination base station,
wherein the other sub-layers of the layer 2 include a packet data convergence protocol sub-layer and a radio link control sub-layer; and the step of the source base station obtaining and reverse-transmitting (102) the uplink buffer data of the user equipment in the media access control protocol layer and the other sub-layers of the layer 2 to the destination base station comprises:
a control plane of the source base station notifying a user plane to reverse-transmit service data;
the source base station obtaining uplink buffer data in the packet data convergence protocol sub-layer, the radio link control sub-layer and the media access control protocol layer of the source base station; and
the source base station reverse-transmitting the uplink buffer data in the packet data convergence protocol sub-layer, the radio link control sub-layer and the media access control protocol layer of the source base station to the destination base station,
wherein the step of the source base station obtaining the uplink buffer data in the packet data convergence protocol sub-layer, the radio link control sub-layer and the media access control protocol layer of the source base station comprises:
the packet data convergence protocol sub-layer notifying the radio link control sub-layer to upload service data;
the radio link control sub-layer notifying the media access control protocol layer to upload the service data;
the media access control protocol layer transmitting the uplink buffer data to the radio link control sub-layer; and
the radio link control sub-layer transmitting the uplink buffer data in the radio link control sub-layer and the media access control protocol layer to the packet data convergence protocol sub-layer.

2. The method according to claim 1, wherein the step of the source base station obtaining the uplink buffer data in the packet data convergence protocol sub-layer, the radio link control sub-layer and the media access control protocol layer of the source base station further comprises:
the source base station arranging according to time sequence the uplink buffer data transmitted to the media access control protocol layer and the radio link control sub-layer of the packet data convergence protocol sub-layer as well as the uplink buffer data in the packet data convergence protocol sub-layer, and delivering data packets with consecutive serial numbers of the uplink buffer data to a core network.

3. The method according to claim 2, wherein the step of the source base station reverse-transmitting the uplink buffer data in the packet data convergence protocol sub-layer, the radio link control sub-layer and the media access control protocol layer of the source base station to the destination base station comprises:
the source base station reverse-transmitting the uplink buffer data in the packet data convergence protocol sub-layer, the radio link control sub-layer and the media access control protocol layer that is not delivered to the core network to the destination base station.

4. The method according to claim 1, wherein the user equipment's current service operates in an acknowledged mode, and the method further comprises:
the radio link control layer of the source base station generating and sending (303) a status report to the user equipment, the status report carrying information of the uplink buffer data in the media access control protocol layer that is reverse-transmitted to the destination base station.

5. A source base station, **characterized by** comprising:
a buffer data transmitting module configured to, upon cross base station handover of user equipment from the source base station to another base station, acquire and reverse-transmit uplink buffer data of the user equipment in a media access control protocol layer and other sub-layers of layer 2 to the other base station,
wherein the other sub-layers of the layer 2 include a packet data convergence protocol sub-layer and a radio link control sub-layer; and
a control plane of the source base station is configured to notify a user plane to reverse-transmit service data;
the buffer data transmitting module is further configured to obtain uplink buffer data in the packet data convergence protocol sub-layer, the radio link control sub-layer and the media access control protocol layer of the source base station; and
the buffer data transmitting module is further configured to reverse-transmit the uplink buffer data in the packet data convergence protocol sub-layer, the radio link control sub-layer and the media access control protocol layer of the base station to the other base station,
wherein
the packet data convergence protocol sub-layer notifying the radio link control sub-layer to upload service data;
the radio link control sub-layer notifying the media access control protocol layer to upload the service data;
the media access control protocol layer transmitting the uplink buffer data to the radio link control sub-layer; and
the radio link control sub-layer transmitting the uplink buffer data in the radio link control sub-layer and the media access control protocol layer to the packet data convergence protocol sub-layer.

6. The base station according to claim 5, wherein the user equipment's current service operates in an acknowledged mode, and the base station further comprises:
a status reporting module, configured to generate and send a status report to the user equipment, the status report carrying information of the uplink buffer data in the media access control protocol layer that is reverse-transmitted to the other base station.

7. A system for processing handover of user equipment comprising a source base station, a destination base station and user equipment,
**characterized in that**
the source base station is configured to acquire and reverse-transmit uplink buffer data of the UE in a media access control protocol layer and other sub-layers of layer 2 to a destination base station when the user equipment performs cross base station handover to the destination base station,
wherein the other sub-layers of the layer 2 include a packet data convergence protocol sub-layer and a radio link control sub-layer; and
a control plane of the source base station is configured to notify a user plane to reverse-transmit service data;
the source base station is further configured to obtain uplink buffer data in the packet data convergence protocol sub-layer, the radio link control sub-layer and the media access control protocol layer of the source base station; and
the source base station is further configured to reverse-transmit the uplink buffer data in the packet data convergence protocol sub-layer, the radio link control sub-layer and the media access control protocol layer of the source base station to the destination base station,
wherein
the packet data convergence protocol sub-layer is configured to notify the radio link control sub-layer to upload service data;
the radio link control sub-layer is configured to notify the media access control protocol layer to upload the service data;
the media access control protocol layer is configured to transmit the uplink buffer data to the radio link control sub-layer; and
the radio link control sub-layer is configured to transmit the uplink buffer data in the radio link control sub-layer and the media access control protocol layer to the packet data convergence protocol sub-layer.

8. The system according to claim 7, wherein the user equipment's current service operates in an acknowledged mode, and
the source base station is further configured to generate and send a status report to the user equipment, the status report carrying information of the uplink buffer data in the media access control protocol layer that is reverse-transmitted to the destination base station.

## Patentansprüche

1. Verfahren zum Verarbeiten einer Übergabe von Nutzergeräten, das umfasst, dass:
das Nutzergerät eine Übergabe über Basisstationen hinweg von einer Quellen-Basisstation an eine Ziel-Basisstation ausführt (101);
**dadurch gekennzeichnet, dass**
die Quellen-Basisstation Uplink-Pufferdaten des Nutzergeräts in einer Medienzugriffssteuerungs-Protokollschicht und in anderen Teilschichten von Schicht 2 beschafft und sie gegensinnig an die Ziel-Basisstation überträgt (102),
wobei die anderen Teilschichten der Schicht 2 eine Paketdaten-Konvergenzprotokoll-Teilschicht und eine Funkverbindungssteuerungs-Teilschicht umfassen; und der Schritt, dass die Quellen-Basisstation die Uplink-Pufferdaten des Nutzergeräts in der Medienzugriffssteuerungs-Protokollschicht und in den anderen Teilschichten der Schicht 2 beschafft und sie gegensinnig an die Ziel-Basisstation überträgt (102), umfasst, dass:
eine Steuerungsebene der Quellen-Basisstation einer Nutzerebene mitteilt, Dienstdaten gegensinnig zu übertragen;
die Quellen-Basisstation Uplink-Pufferdaten in der Paketdaten-Konvergenzprotokoll-Teilschicht, in der Funkverbindungssteuerungs-Teilschicht und in der Medienzugriffssteuerungs-Protokollschicht der Quellen-Basisstation beschafft; und
die Quellen-Basisstation die Uplink-Pufferdaten in der Paketdaten-Konvergenzprotokoll-Teilschicht, der Funkverbindungssteuerungs-Teilschicht und der Medienzugriffssteuerungs-Protokollschicht der Quellen-Basisstation an die Ziel-Basisstation gegensinnig überträgt,
wobei der Schritt, dass die Quellen-Basisstation die Uplink-Pufferdaten in der Paketdaten-Konvergenzprotokoll-Teilschicht, in der Funkverbindungssteuerungs-Teilschicht und in der Medienzugriffssteuerungs-Protokollschicht der Quellen-Basisstation beschafft, umfasst, dass:
die Paketdaten-Konvergenzprotokoll-Teilschicht die Funkverbindungssteuerungs-Teilschicht benachrichtigt, Dienstdaten hoch zu laden;
die Funkverbindungssteuerungs-Teilschicht die Medienzugriffssteuerungs-Protokollschicht benachrichtigt, die Dienstdaten hoch zu laden;
die Medienzugriffssteuerungs-Protokollschicht die Uplink-Pufferdaten an die Funkverbindungssteuerungs-Teilschicht überträgt; und
die Funkverbindungssteuerungs-Teilschicht die Uplink-Pufferdaten in der Funkverbindungssteuerungs-Teilschicht und der Medienzugriffssteuerungs-Protokollschicht an die Paketdaten-Konvergenzprotokoll-Teilschicht überträgt.

2. Verfahren nach Anspruch 1, wobei der Schritt, dass die Quellen-Basisstation die Uplink-Pufferdaten in der Paketdaten-Konvergenzprotokoll-Teilschicht, in der Funkverbindungssteuerungs-Teilschicht und in der Medienzugriffssteuerungs-Protokollschicht der Quellen-Basisstation beschafft, ferner umfasst, dass:
die Quellen-Basisstation die Uplink-Pufferdaten, die an die Medienzugriffssteuerungs-Protokollschicht und an die Funkverbindungssteuerungs-Teilschicht der Paketdaten-Konvergenzprotokoll-Teilschicht übertragen wurden, sowie die Uplink-Pufferdaten in der Paketdaten-Konvergenzprotokoll-Teilschicht, in Übereinstimmung mit einer zeitlichen Sequenz anordnet und Datenpakete mit aufeinanderfolgenden Seriennummern der Uplink-Pufferdaten an ein Kernnetzwerk liefert.

3. Verfahren nach Anspruch 2, wobei der Schritt, dass die Quellen-Basisstation die Uplink-Pufferdaten in der Paketdaten-Konvergenzprotokoll-Teilschicht, in der Funkverbindungssteuerungs-Teilschicht und in der Medienzugriffssteuerungs-Protokollschicht der Quellen-Basisstation an die Ziel-Basisstation gegensinnig überträgt, umfasst, dass:
die Quellen-Basisstation die Uplink-Pufferdaten in der Paketdaten-Konvergenzprotokoll-Teilschicht, in der Funkverbindungssteuerungs-Teilschicht und in der Medienzugriffssteuerungs-Protokollschicht, die nicht an das Kernnetzwerk geliefert wurden, an die Ziel-Basisstation gegensinnig überträgt.

4. Verfahren nach Anspruch 1, wobei der aktuelle Dienst des Nutzergeräts in einem Bestätigungsmodus arbeitet und das Verfahren ferner umfasst, dass:
die Funkverbindungssteuerungs-Schicht der Quellen-Basisstation einen Statusbericht erzeugt und an das Nutzergerät sendet (303), wobei der Statusbericht Informationen über die Uplink-Pufferdaten in der Medienzugriffssteuerungs-Protokollschicht trägt, die an die Ziel-Basisstation gegensinnig übertragen werden.

5. Quellen-Basisstation, **dadurch gekennzeichnet, dass** sie umfasst:
ein Modul zum Übertragen von Pufferdaten, das ausgestaltet ist, um bei einer Übergabe des Nutzergeräts über Basisstationen hinweg von der Quellen-Basisstation an eine andere Basisstation Uplink-Pufferdaten des Nutzergeräts in einer Medienzugriffssteuerungs-Protokollschicht und in anderen Teilschichten von Schicht 2 zu beschaffen und an die andere Basisstation gegensinnig zu übertragen,
wobei die anderen Teilschichten der Schicht 2 eine Paketdaten-Konvergenzprotokoll-Teilschicht und eine Funkverbindungssteuerungs-Teilschicht enthalten; und
eine Steuerungsebene der Quellen-Basisstation ausgestaltet ist, um einer Nutzerebene mitzuteilen, Dienstdaten gegensinnig zu übertragen;
das Modul zum Übertragen von Pufferdaten ferner ausgestaltet ist, um Uplink-Pufferdaten in der Paketdaten-Konvergenzprotokoll-Teilschicht, in der Funkverbindungssteuerungs-Teilschicht und in der Medienzugriffssteuerungs-Protokollschicht der Quellen-Basisstation zu beschaffen; und
das Modul zum Übertragen von Pufferdaten ferner ausgestaltet ist, um die Uplink-Pufferdaten in der Paketdaten-Konvergenzprotokoll-Teilschicht, in der Funkverbindungssteuerungs-Teilschicht und in der Medienzugriffssteuerungs-Protokollschicht der Basisstation gegensinnig an die andere Basisstation zu übertragen,
wobei
die Paketdaten-Konvergenzprotokoll-Teilschicht der Funkverbindungssteuerungs-Teilschicht mitteilt, Dienstdaten hoch zu laden;
die Funkverbindungssteuerungs-Teilschicht der Medienzugriffssteuerungs-Protokollschicht mitteilt, die Dienstdaten hoch zu laden;
die Medienzugriffssteuerungs-Protokollschicht die Uplink-Pufferdaten an die Funkverbindungssteuerungs-Teilschicht überträgt; und
die Funkverbindungssteuerungs-Teilschicht die Uplink-Pufferdaten in der Funkverbindungssteuerungs-Teilschicht und in der Medienzugriffssteuerungs-Protokollschicht an die Paketdaten-Konvergenzprotokoll-Teilschicht überträgt.

6. Basisstation nach Anspruch 5, wobei der aktuelle Dienst des Nutzergeräts in einem Bestätigungsmodus arbeitet und die Basisstation ferner umfasst:
ein Statusberichtmodul, das ausgestaltet ist, um einen Statusbericht zu erzeugen und an das Nutzergerät zu senden, wobei der Statusbericht Informationen über die Uplink-Pufferdaten in der Medienzugriffssteuerungs-Protokollschicht trägt, die gegensinnig an die andere Basisstation übertragen werden.

7. System zum Verarbeiten einer Übergabe von Nutzergeräten, das eine Quellen-Basisstation, eine Ziel-Basisstation und Nutzergeräte umfasst,
**dadurch gekennzeichnet, dass**
die Quellen-Basisstation ausgestaltet ist, um Uplink-Pufferdaten des Nutzergeräts in einer Medienzugriffssteuerungs-Protokollschicht und in anderen Teilschichten von Schicht 2 zu beschaffen und gegensinnig an eine Ziel-Basisstation zu übertragen, wenn das Nutzergerät eine Übergabe über Basisstationen hinweg an die Ziel-Basisstation ausführt,
wobei die anderen Teilschichten der Schicht 2 eine Paketdaten-Konvergenzprotokoll-Teilschicht und eine Funkverbindungssteuerungs-Teilschicht umfassen; und
eine Steuerungsebene der Quellen-Basisstation ausgestaltet ist, um einer Nutzerebene mitzuteilen, Dienstdaten gegensinnig zu übertragen;
die Quellen-Basisstation ferner ausgestaltet ist, um Uplink-Pufferdaten in der Paketdaten-Konvergenzprotokoll-Teilschicht, in der Funkverbindungssteuerungs-Teilschicht und in der Medienzugriffssteuerungs-Protokollschicht der Quellen-Basisstation zu beschaffen; und
die Quellen-Basisstation ferner ausgestaltet ist, um die Uplink-Pufferdaten in der Paketdaten-Konvergenzprotokoll-Teilschicht, in der Funkverbindungssteuerungs-Teilschicht und in der Medienzugriffssteuerungs-Protokollschicht der Quellen-Basisstation an die Ziel-Basisstation gegensinnig zu übertragen,
wobei
die Paketdaten-Konvergenzprotokoll-Teilschicht ausgestaltet ist, um der Funkverbindungssteuerungs-Teilschicht mitzuteilen, Dienstdaten hoch zu laden;
die Funkverbindungssteuerungs-Teilschicht ausgestaltet ist, um der Medienzugriffssteuerungs-Protokollschicht mitzuteilen, die Dienstdaten hoch zu laden;
die Medienzugriffsteuerungs-Protokollschicht ausgestaltet ist, um die Uplink-Pufferdaten an die Funkverbindungssteuerungs-Teilschicht zu übertragen; und
die Funkverbindungssteuerungs-Teilschicht ausgestaltet ist, um die Uplink-Pufferdaten in der Funkverbindungssteuerungs-Teilschicht und in der Medienzugriffsteuerungs-Protokollschicht an die Paketdaten-Konvergenzprotokoll-Teilschicht zu übertragen.

8. System nach Anspruch 7, wobei der aktuelle Dienst des Nutzergeräts in einem Bestätigungsmodus arbeitet, und
die Quellen-Basisstation ferner ausgestaltet ist, um einen Statusbericht zu erzeugen und an das Nutzergerät zu senden, wobei der Statusbericht Informationen über die Uplink-Pufferdaten in der Medienzugriffsteuerungs-Protokollschicht trägt, die an die Ziel-Basisstation gegensinnig übertragen werden.

## Revendications

1. Procédé de traitement de transfert intercellulaire d'équipement d'utilisateur, comprenant :
la réalisation par l'équipement d'utilisateur (101) d'un transfert intercellulaire entre stations de base, d'une station de base source vers une station de base de destination ;
**caractérisé par** :
l'obtention et la transmission inverse (102) par la station de base source de données de tampon de liaison montante de l'équipement d'utilisateur dans une couche de protocole de commande d'accès au support physique et d'autres sous-couches de couche 2 à la station de base de destination, dans lequel les autres sous-couches de la couche 2 incluent une sous-couche de protocole de convergence de données en mode paquet et une sous-couche de commande de liaison radioélectrique ; et l'étape d'obtention et de transmission inverse (102) par la station de base source des données de tampon de liaison montante de l'équipement d'utilisateur dans la couche de protocole de commande d'accès au support physique et les autres sous-couches de la couche 2 à la station de base de destination comprend :
la notification par un plan de commande de la station de base source à un plan d'utilisateur d'avoir à effectuer la transmission inverse de données de service ;
l'obtention par la station de base source de données de tampon de liaison montante dans la sous-couche de protocole de convergence de données en mode paquet, la sous-couche de commande de liaison radioélectrique et la couche de protocole de commande d'accès au support physique de la station de base source ; et
la transmission inverse par la station de base source des données de tampon de liaison montante dans la sous-couche de protocole de convergence de données en mode paquet, la sous-couche de commande de liaison radioélectrique et la couche de protocole de commande d'accès au support physique de la station de base source à la station de base de destination, dans lequel l'étape d'obtention par la station de base source des données de tampon de liaison montante dans la sous-couche de protocole de convergence de données en mode paquet, la sous-couche de commande de liaison radioélectrique et la couche de protocole de commande d'accès au support physique de la station de base source comprend :
la notification par la sous-couche de protocole de convergence de données en mode paquet à la sous-couche de commande de liaison radioélectrique d'avoir à télécharger des données de service ;
la notification par la sous-couche de commande de liaison radioélectrique à la couche de protocole de commande d'accès au support physique d'avoir à télécharger les données de service ;
la transmission par la couche de protocole de commande d'accès au support physique des données de tampon de liaison montante à la sous-couche de commande de liaison radioélectrique ; et
la transmission par la sous-couche de commande de liaison radioélectrique des données de tampon de liaison montante dans la sous-couche de commande de liaison radioélectrique et la couche de protocole de commande d'accès au support physique à la sous-couche de protocole de convergence de données en mode paquet.

2. Procédé selon la revendication 1, dans lequel l'étape d'obtention par la station de base source des données de tampon de liaison montante dans la sous-couche de protocole de convergence de données en mode paquet, la sous-couche de commande de liaison radioélectrique et la couche de protocole de commande d'accès au support physique de la station de base source comprend en outre :
l'agencement par la station de base source, en fonction d'une séquence temporelle, des données de tampon de liaison montante transmises à la couche de protocole de commande d'accès au support physique et à la sous-couche de commande de liaison radioélectrique de la sous-couche de protocole de convergence de données en mode paquet ainsi que des données de tampon de liaison montante dans la sous-couche de protocole de convergence de données en mode paquet, et la remise de paquets de données avec des numéros de série consécutifs des données de tampon de liaison montante à un réseau central.

3. Procédé selon la revendication 2, dans lequel l'étape de transmission inverse par la station de base source des données de tampon de liaison montante dans la sous-couche de protocole de convergence de données en mode paquet, la sous-couche de commande de liaison radioélectrique et la couche de protocole de commande d'accès au support physique de la station de base source à la station de base de destination comprend :
la transmission inverse par la station de base source des données de tampon de liaison montante dans la sous-couche de protocole de convergence de données en mode paquet, la sous-couche de commande de liaison radioélectrique et la couche de protocole de commande d'accès au support physique, qui ne sont pas remises au réseau central, à la station de base de destination.

4. Procédé selon la revendication 1, dans lequel le service actuel de l'équipement d'utilisateur fonctionne dans un mode avec acquittement, et le procédé comprend en outre :
la génération et l'envoi (303) par la couche de commande de liaison radioélectrique de la station de base source d'un rapport d'état à l'équipement d'utilisateur, le rapport d'état contenant des informations sur les données de tampon de liaison montante dans la couche de protocole de commande d'accès au support physique, qui font l'objet d'une transmission inverse à la station de base de destination.

5. Station de base source, **caractérisée en ce qu'**elle comprend :
un module de transmission de données de tampon conçu pour, lors d'un transfert intercellulaire entre stations de base d'équipement d'utilisateur, de la station de base source à une autre station de base, acquérir et effectuer la transmission inverse de données de tampon de liaison montante de l'équipement d'utilisateur dans une couche de protocole de commande d'accès au support physique et d'autres sous-couches de couche 2 vers l'autre station de base,
dans lequel les autres sous-couches de la couche 2 incluent une sous-couche de protocole de convergence de données en mode paquet et une sous-couche de commande de liaison radioélectrique ; et
un plan de commande de la station de base source est conçu pour notifier à un plan d'utilisateur d'effectuer la transmission inverse de données de service ;
le module de transmission de données de tampon est conçu en outre pour obtenir des données de tampon de liaison montante dans la sous-couche de protocole de convergence de données en mode paquet, la sous-couche de commande de liaison radioélectrique et la couche de protocole de commande d'accès au support physique de la station de base source ; et
le module de transmission de données de tampon est conçu en outre pour effectuer la transmission inverse des données de tampon de liaison montante dans la sous-couche de protocole de convergence de données en mode paquet, la sous-couche de commande de liaison radioélectrique et la couche de protocole de commande d'accès au support physique de la station de base vers l'autre station de base, dans laquelle la sous-couche de protocole de convergence de données en mode paquet notifie à la sous-couche de commande de liaison radioélectrique de télécharger des données de service ;
la sous-couche de commande de liaison radioélectrique notifie à la couche de protocole de commande d'accès au support physique de télécharger les données de service ;
la couche de protocole de commande d'accès au support physique transmet les données de tampon de liaison montante à la sous-couche de commande de liaison radioélectrique ; et
la sous-couche de commande de liaison radioélectrique transmet les données de tampon de liaison montante dans la sous-couche de commande de liaison radioélectrique et la couche de protocole de commande d'accès au support physique à la sous-couche de protocole de convergence de données en mode paquet.

6. Station de base selon la revendication 5, dans laquelle le service actuel de l'équipement d'utilisateur fonctionne dans un mode avec acquittement, et la station de base comprend en outre :
un module de génération de rapport d'état, conçu pour produire et envoyer un rapport d'état à l'équipement d'utilisateur, le rapport d'état contenant des informations sur les données de tampon de liaison montante dans la couche de protocole de commande d'accès au support physique, qui font l'objet d'une transmission inverse à l'autre station de base.

7. Système permettant de traiter le transfert intercellulaire d'équipement d'utilisateur, comprenant une station de base source, une station de base de destination et un équipement d'utilisateur,
**caractérisé en ce que** :
la station de base source est conçue pour acquérir et soumettre à une transmission inverse des données de tampon de liaison montante de l'équipement d'utilisateur dans une couche de protocole de commande d'accès au support physique et d'autres sous-couches de couche 2 vers une station de base de destination, lorsque l'équipement d'utilisateur effectue un transfert intercellulaire entre stations de base vers la station de base de destination,
dans lequel les autres sous-couches de la couche 2 incluent une sous-couche de protocole de convergence de données en mode paquet et une sous-couche de commande de liaison radioélectrique ; et
un plan de commande de la station de base source est conçu pour notifier à un plan d'utilisateur d'effectuer la transmission inverse de données de service ;
la station de base source est conçue en outre pour obtenir des données de tampon de liaison montante dans la sous-couche de protocole de convergence de données en mode paquet, la sous-couche de commande de liaison radioélectrique et la couche de protocole de commande d'accès au support physique de la station de base source ; et
la station de base source est conçue en outre pour effectuer la transmission inverse des données de tampon de liaison montante dans la sous-couche de protocole de convergence de données en mode paquet, la sous-couche de commande de liaison radioélectrique et la couche de protocole de commande d'accès au support physique de la station de base source à la station de base de destination,
dans lequel :
la sous-couche de protocole de convergence de données en mode paquet est conçue pour notifier à la sous-couche de commande de liaison radioélectrique de télécharger des données de service ;
la sous-couche de commande de liaison radioélectrique est conçue pour notifier à la couche de protocole de commande d'accès au support physique de télécharger les données de service ;
la couche de protocole de commande d'accès au support physique est conçue pour transmettre les données de tampon de liaison montante à la sous-couche de commande de liaison radioélectrique ; et
la sous-couche de commande de liaison radioélectrique est conçue pour transmettre les données de tampon de liaison montante dans la sous-couche de commande de liaison radioélectrique et la couche de protocole de commande d'accès au support physique à la sous-couche de protocole de convergence de données en mode paquet.

8. Système selon la revendication 7, dans lequel le service actuel de l'équipement d'utilisateur fonctionne dans un mode avec acquittement, et la station de base source est conçue en outre pour produire et envoyer un rapport d'état à l'équipement d'utilisateur, le rapport d'état contenant des informations sur les données de tampon de liaison montante dans la couche de protocole de commande d'accès au support physique, qui font l'objet d'une transmission inverse à la station de base de destination.
